# EUROPÄISCHE PATENTSCHRIFT

(11) **EP 0 895 969 B1**
(45) Veröffentlichungstag und Bekanntmachung des Hinweises auf die Patenterteilung: **28.11.2001**
(21) Anmeldenummer: 98114181.5
(22) Anmeldetag: 29.07.1998
(51) Int. Cl.: C03C 3/064, C03C 8/14, C03C 17/04

(54) **Bleifreie Glaszusammensetzungen mit niedrigem Schmelzpunkt**
Lead-free glass compositions having a low melting point
Compositions de verre exemptes de plomb présentant un bas point de fusion

(30) Priorität: 08.08.1997 US 908953
(43) Veröffentlichungstag der Anmeldung: 10.02.1999
(73) Patentinhaber: dmc2 Degussa Metals Catalysts Cerdec AG, 60287 Frankfurt am Main (DE)
(72) Erfinder: Sakoske, George E., 44124 Mayfield Heights, Ohio (US)

(56) Entgegenhaltungen:
- EP-A- 0 782 974
- GB-A- 834 382
- US-A- 4 554 258
- US-A- 5 093 285
- US-A- 5 308 803
- US-A- 5 346 651
- US-A- 5 547 749
- US-A- 5 643 636
- PATENT ABSTRACTS OF JAPAN vol. 098, no. 001, 30. Januar 1998 & JP 09 227214 A (ASAHI GLASS CO LTD), 2. September 1997 -& DATABASE WPI Section Ch, Week 9745 Derwent Publications Ltd., London, GB; Class L01, AN 97-486265 XP002087135 & JP 09 227214 A (ASAHI GLASS CO LTD) , 2. September 1997

## Beschreibung

### HINTERGRUND DER ERFINFUNG

Bleifreie Glaszusammensetzungen sind im Stand der Technik bekannt. Als Beispiele sind die folgenden Druckschriften zu nennen: U.S.-Patent 4,892,847 (Reinherz), U.S.-Patent 4,554,258 (Francel), U.S.-Patent 5,252,521 (Roberts), U.S.-Patent 4,970,178 (Klimas), U.S.-Patent 5,308,803 (Clifford), U.S.-Patent 5,093,285 (Murkens), U.S.-Patent 5,559,059 (Ryan), U.S.-Patent 2,301,100 (Newman).

Die folgenden Druckschriften enthalten weitere Offenbarungen bleifreier Glaszusammensetzungen: U.S.-Patent 4,446,241 (Francel); U.S.-Patent 4,537,862 (Francel); U.S.-Patent 4,224,074 (Reade); U.S.-Patent 4,312,951 (Eppler); U.S.-Patent 4,376,169 (Eppler); U.S.-Patent 5,504,045 (Emledi); U.S.-Patent 5,578,533 (Manabe) und Internationale Anmeldung Nr. PCT/EP 94/00403 (Evans).

Diese Glaszusammensetzungen werden im allgemeinen zur Herstellung von Glasfritten nach bekannten Verfahren verwendet. Diese Glasfritten werden dann für die Herstellung von Glasemailzusammensetzungen eingesetzt. Diese Glas- (bzw. Keramik-)Emailzusammensetzungen werden bekanntlich für die Bildung dekorativer Schichten auf Glasgut, Porzellan, Architekturglas u.ä. verwendet.

Besonders geeignet sind sie für die Bildung farbiger Ränder auf Glasscheiben für den Einsatz als Kraftfahrzeug-Windschutzscheiben, -Seitenleuchten und -Rückleuchten. Diese farbigen Ränder verbessern das Erscheinungsbild und verhindern die Beschädigung darunterliegender Klebschichten durch UV-Strahlung.

Die Emailzusammensetzungen bestehen im allgemeinen in erster Linie aus einer Glasfritte, einem Farbstoff und einem organischen Trägermaterial. Sie werden auf das gewünschte Substrat aufgetragen und dann gebrannt, um den organischen Träger abzubrennen, die Glasfritte anzuschmelzen und die Emailschicht hierdurch mit dem Substrat zu verbinden.

Glasscheiben für den Einsatz in Kraftfahrzeugen werden im allgemeinen mit der keramischen Emailzusammensetzung beschichtet und dann unter erhöhten Temperaturen einem Formverfahren unterzogen. Während dieser Behandlung schmilzt das Email und verschmilzt mit dem Glassubstrat. Gleichzeitig wird das Glas in die gewünschte endgültige Form gebracht. Viele bekannte Beschichtungen weisen jedoch die Neigung auf, an den Materialien, die das Formwerkzeug, also z.B. ein mit Glasfasern oder Metallfasern bedecktes Formwerkzeug, bedecken, festzukleben, weil diese konventionellen Emailzusammensetzungen nach der Schmelze eine geringe Viskosität aufweisen und bei hohen Temperaturen an anderen Stoffen haften. Diese Materialien sind daher für den Einsatz in Glasformverfahren, in denen das erhitzte, mit Email beschichtete Glas mit einem mit Material bedeckten Formwerkzeug in Kontakt kommt, ungeeignet.

Um die Formgebung von Glasscheiben mit einer darauf aufgebrachten keramischen Emailschicht, die erhöhten Biege- oder Formtemperaturen widersteht und bei wiederholtem Kontakt der Glassscheibe mit dem bedeckten Formwerkzeug nicht an diesem haftet, zu erleichtern, sind verschiedene Verfahren vorgeschlagen worden. Zum Beispiel schlagen die U.S.-Patente 4,596,590 und 4,770,685 (Boaz) und die EP 0 201 241 vor, der Farbverbindung ein niederwertiges Metalloxidpulver, z.B. Kupfer(I)oxid, beizugeben, um eine nicht-haftende Barriere zwischen der Beschichtung und dem mit Glasfaser bedeckten Formwerkzeug zu bilden. Die U.S.-Patentschriften 4,684,389 , 4,857,096 und 5,037,783 (Boaz) schlagen zur Erzielung einer ähnlichen Wirkung die Zugabe von hochfeinem Zink-Metallpulver vor. Der Einsatz eines Eisen-Metallpulvers wird in der U.S.-Patentschrift 4,983,196 (Stotka) vorgeschlagen.

Die Verwendung anderer Metalloxidpulver, einschließlich Zusammensetzungen mit einem Gehalt an Wismutoxid, wurde in den U.S.-Patentschriften 4,029,605 (Kosiorek), 4,098,949 (Kosiorek), 4,892,847 (Reinherz), 4,959,090 (Reinherz), 4,970,178 (Klimas), 5,093,285 (Murkene), 5,203,902 (Murkens) und in der EP 0 370 693 vorgeschlagen.

Bestimmte Wismut enthaltende Systeme ergeben jedoch ein schwaches Glas, z.B. in Gegenwart von Lithium, und weisen schlechte Silbermigrations- sowie unzureichende Antihaft-Eigenschaften auf.

Die U.S.-Patentschrift 4,828,596 schlägt vor, der keramischen Emailzusammensetzung als Antihaftmittel Kupfersulfid oder Kupfersulfat beizugeben. Sulfide bzw. Sulfate anderer Metalle wurden in der U.S.-Patentschrift 4,822,396 (Reinherz) als Antihaftmittel vorgeschlagen.

Eine vermeintlich verbesserte nicht-haftende keramische Emailverbindung wird in den U.S.-Patentschriften 5,153,150 und 5,208,191 (Ruderer) vorgeschlagen. Hier wird ein Zn₂SiO₄ enthaltendes Impfmaterial-Pulver sowohl in Gegenwart von als auch ohne Wismutoxid einer Oxidverbindung beigegeben.

Ein weiteres Problem liegt darin, daß viele bekannte keramische Emailsysteme eine bleihaltige Glasfritte verwenden. Es ist aus ökologischen Gründen wünschenswert, den Einsatz bleihaltiger Systeme zu vermeiden.

Hinzu kommt, daß manche der vorgenannten Emailsysteme in konventionellen Glasherstellungsverfahren zwar relativ gut operieren, manche jedoch für den Einsatz in den neuen "Tiefbiege"-Verfahren für die Herstellung von Glasscheiben für Kraftfahrzeuge ungeeignet sind.

Entscheidend ist außerdem, daß die Emailzusammensetzungen auch ausreichende Resistenz gegen bestimmte chemische Substanzen aufweisen müssen, mit denen sie in Kontakt kommen können. Auch in dieser Hinsicht versagen viele Zusammensetzungen des Standes der Technik.

Das US-Patent 4,554,258 lehrt eine Glasfrittezusammensetzung zur Verwendung in Glasuren und Emails. Die Zusammensetzung besteht im wesentlichen aus (in Gew.-%): 48-57 % Bi₂O₃, 29-38 % SiO₂, 3-8 % B₂O₃, 2-8 % R₂O und kann zusätzlich TiO₂, ZrO₂, Al₂O₃, BaO, ZnO und CdO enthalten.

Das GB-Patent 834,382 lehrt Glasfritten und sie enthaltende keramische Bindemittel. Die Glasfritte umfasst ein Alkalimetall-Wismut-Borsilikat, enthaltend (in Gew.-%): 2-10 % Alkalimetalloxid, 35-75 % Bi₂O₃, 5-15 % B₂O₃, 9-32 % SiO₂ und 0-35 % CdO.

Das US-Patent 5,093,285 lehrt eine Glasflusszusammensetzung auf der Basis von Bi₂O₃, SiO₂, B₂O₃, TiO₂, Na₂O, K₂O und Li₂O sowie als fakultative Bestandteile Al₂O, ZrO₂, BaO, CaO, MgO, ZnO, PbO und CdO. Lithiumoxid ist zwingender Bestandteil in diesem Glasfluss.

Jede der bekannten Emailzusammensetzungen weist einen oder mehrere der beschriebenen Defekte auf. Es ist daher wünschenswert, eine Zusammensetzung bereitzustellen, die diese Unzulänglichkeiten vermeidet. Die vorliegende Erfindung stellt solche keramische Emailzusammensetzungen, ein Verfahren zu deren Verwendung sowie damit beschichtete Substrate bereit.

Die vorliegende Erfindung betrifft eine Glaszusammensetzung und daraus hergestellte Glasfritte, die für die Herstellung von Email verwendet werden kann und eine verbesserte chemische Beständigkeit der eingebrannten Emailschicht zur Folge hat. In der derzeit einzigen für den Einsatz in Emails für Kraftfahrzeuge geeigneten bleifreien Glasfritte, die den z.B. in Japan vorgeschriebenen Schwefelsäure-Beständigkeitstest besteht, werden Lithiumionen verwendet. Der Einsatz von Lithium kann jedoch, wenn keine sehr sorgfältige Kontrolle erfolgt, unerwünschte Spannungen und Brüche des Substrats zur Folge haben. Die neuen Glaszusammensetzungen gemäß vorliegender Erfindung vermeiden dieses Problem. Außerdem besitzen diese Zusammensetzungen auch hervorragende Antihaft-Eigenschaften.

### DETAILLIERTE BESCHREIBUNG DER ERFINDUNG

Die vorliegende Erfindung betrifft neue Glaszusammensetzungen, aus welchen sich Glasfritten mit einem Gehalt an Wismut-Borsilikat herstellen lassen, die einen höheren Wismutoxid-Gehalt und/oder höheren Boroxid-Gehalt aufweisen. Diese Systeme erfordern keinen Einsatz von Zirkonoxid, Titanoxid oder Lithiumoxid in der Zusammensetzung.

Die Glaszusammensetzungen gemäß vorliegender Erfindung bestehen im wesentlichen aus den in der nachfolgenden Tabelle angegebenen Bestandteile. Der Begriff "im wesentlichen" schließt die Anwesenheit von aus den Rohstoffen stammenden üblichen technischen Verunreinigungen ein.

| Oxid-Komponente | Bereich (Gew.-%) |
|---|---|
| Bi₂O₃ | 48-62 |
| SiO₂ | 25-33 |
| B₂O₃ | 8-12 |
| Al₂O₃ | 0.1-0.5 |
| TiO₂ | 1-2 |
| Na₂O | 3.2-5.2 |
| K₂O | 0.2-0.7 |
| Li₂O | 0 |
| F⁻¹ | 0 |

Die Glaszusammensetzungen werden in bekannter Weise hergestellt, z.B. durch Mischung der bekannten Ausgangsmaterialien und Schmelzen bei einer Temperatur von ca. -1000 bis 1300 °C für einen Zeitraum von ca. 40 Minuten zur Bildung einer Glasschmelze mit der gewünschten Zusammensetzung. Die Glasschmelze kann dann in bekannter Weise mit Wasser abgeschreckt werden, um eine Glasfritte zu bilden. Diese Glasfritte läßt sich dann mit konventionellen Mahltechniken mahlen, um feine Teilchen in einer Größe von vorzugsweise 2 bis 6 Mikron zu erhalten. Die vorliegende Erfindung stellt des weiteren (keramische) Glasemailzusammensetzungen mit den vorstehend beschriebenen Glasfrittezusammensetzungen bereit. Diese Glasemailzusammensetzungen enthalten etwa 25 bis 90 Gew.-% Feststoffe in Form einer Glasfritte-Komponente.

Diese Komponente umfaßt die offenbarten Glasfrittezusammensetzungen. Sie kann eine einzelne erfindungsgemäße Zusammensetzung oder eine Mischung verschiedener Glasfritten sein. Auch kann mindestens eine Glasfritte gemäß vorliegender Erfindung mit einer weiteren Glasfritte mit niedrigem Schmelzpunkt und einer Zusammensetzung außerhalb des erfindungsgemäßen Bereichs kombiniert werden, vorausgesetzt, diese andere Glasfritte bewirkt keine Verschlechterung der Qualität des hergestellten Emails.

Glasfritten mit den nachstehenden Zusammensetzungen sind Beispiele solcher weiteren (nicht-erfindungsgemäßen) Glasfritten:

| Oxid | Gew.%-Bereich |
|---|---|
| | |
| SiO₂ | 20 - 35 |
| Bi₂O₃ | 10 - 50 |
| ZnO | 5 - 45 |
| B₂O₃ | 5 - 15 |
| Na₂O | 1 - 7 |
| CaO | 0 - 10 |
| TiO₂ | 0 - 2 |
| Al₂O₃ | 0 - 5 |
| ZrO₂ | 0 - 2 |
| F₂ | 0 - 1 |

Ein Verfahren für die Herstellung einer solchen Glasfritte ist im U.S.-Patent 5,346,651 offenbart. Diese Glasfritten sind von ausreichend niedriger Brenntemperatur, um gutes Haften am Substrat zu gewährleisten, und besitzen niedrige Dichteeigenschaften.

Die Emailzusammensetzung enthält auch etwa 10 bis 37 Gew.-% Feststoffe in Form eines Oxid-Pigments oder einer Kombination verschiedener Oxid-Pigmente. Pigmente dieser Art sind Stand der Technik und im Handel erhältlich. Beispiele sind u.a. CuCr₂O₄, (Co,Fe (Fe,Cr)₂O₄ u.ä. Im Handel erhältliche Pigmente dieser Art sind beispielsweise die Pigmente der Cerdec Corporation, z.B. *2991, ein schwarzes Kupfer-Chromit-Pigment, *2980, ein schwarzes Kobalt-Chromiteisen-Pigment, sowie *2987, ein schwarzes Nickel-Mangan-Eisenchromit-Pigment.

Die Emailzusammensetzungen enthalten auch einen organischen Träger. Der in den Zusammensetzungen einzusetzende Träger wird unter Berücksichtigung der vorgesehenen Anwendung des Endprodukts ausgewählt. Entscheidend ist, daß der Träger die Feststoffteilchen gut suspendiert und während des Brennvorgangs der Glaszusammensetzung auf dem Substrat vollständig verbrennt. Typische Träger sind organisch und umfassen u.a. Zusammensetzungen auf Grundlage von Pinienölen, pflanzlichen Ölen, mineralischen Ölen, Mineralölfraktionen von niedrigem Molekulargewicht, Tridecyl-Alkohol, synthetische und natürliche Harze und dergleichen. Oberflächenaktive Mittel und/oder andere filmbildende Modifizierungsmittel können ebenfalls beigegeben werden.

Dementsprechend sind auch Träger auf UV-Basis für den Einsatz in der Erfindung geeignet. Solche UV-Träger sind weithin bekannt und bestehen im allgemeinen aus polymerisierbaren Monomeren und/oder Oligomeren mit einem Gehalt an z.B. Acrylat- oder Methacrylat-Funktionsgruppen sowie Photoinitiatoren und Polymerisationshemmern. Repräsentative Systeme dieser Art sind in den U.S.-Patenten 4,306,012 und 4,649,062 offenbart. Solche Systeme werden nach dem Aufbringen auf das Substrat bekanntlich mit UV-Strahlung gehärtet.

Die im speziellen Fall einzusetzenden Träger und Mengen werden unter Berücksichtigung der spezifischen Komponenten der Zusammensetzung und der gewünschten Viskosität ausgewählt. Im allgemeinen liegt der Trägeranteil bei etwa 10 bis 40 Gew.-%, gemessen am Gesamtgewicht der Emailzusammensetzung.

Die Emailzusammensetzungen sind generell zähflüssig, wobei die Viskosität von der Auftragmethode und der vorgesehenen Anwendung des Produkts abhängt. Für die Zwecke des Siebdrucks sind Viskositäten im Bereich von 10 bis 80 Pa's (10.000 bis 80.000 Centipoise), vorzugsweise 35 bis 65 Pa's (35.000 bis 65.000 cP), gemessen bei 20 °C mit einem Brookfield-Viskometer, #7-Spindel bei 20 rpm, geeignet.

Die erfindungsgemäßen Emailzusammensetzungen können auch bis zu 15 Gew.-% Feststoffe in Form gebräuchlicher Füllstoffe, wie Kieselsäure und Aluminiumoxid und weiterer gebräuchlicher Zusatzstoffe, wie Eisen, Silicium, Zink und dergleichen, enthalten, die gewünschte Eigenschaften, wie z.B. den Silbermigrations-Widerstand steigern. Der Füllstoff kann auch ein feuerfester oxidischer Füllstoff sein, wie z.B. Kieselkalkspat (Wollastonit) und Verbindungen, wie Aluminiumsilikate, Calciumsilikat-Verbindungen, Bor-Aluminiumsilikate, Natrium-Calcium-Aluminiumsilikat-Verbindungen, Feldspat-Verbindungen, Titanoxid und Kombinationen solcher Oxide.

Die Emailzusammensetzungen können auch bis zu 20 Gew.-% Feststoffe in Form eines kristallförmigen Impfmaterials, wie z.B. Wismutsilikat, enthalten, das in der U.S.-Patentschrift 5,714,420 , die durch Nennung in vorliegende Patentanmeldung eingeschlossen ist, offenbart ist. Solche Impfmaterialien auf Grundlage von Wismutsilikat sind u.a. Bi₁₂SiO₂₀, Bi₄(SiO₄)₃ und Bi₂SiO₅.

Die Emailzusammensetzungen enthalten im allgemeinen etwa 85 bis 60 Gew.-% der vorstehend beschriebenen Feststoffe und etwa 15 bis 40 Gew.-% des geeigneten organischen Trägers. Die Viskosität der Zusammensetzung wird derart angepaßt, damit sie für das Auftragen auf dem gewünschten Substrat durch Siebdruck, Rollenbeschichtung oder Sprühen geeignet ist.

Die vorliegende Erfindung betrifft auch ein Substrat, auf dem eine erfindungsgemäße Emailzusammensetzung eingebrannt ist. Beispiele solcher Substrate sind Glassubstrate, Keramiksubstrate und Substrate aus anderen porenfreien Materialien sowie insbesondere ein Substrat aus einem Kraftfahrzeug-Glasmaterial. Weitere Substrate sind Architekturglas, Geräte und Getränkebehälter.

Um die erfindungsgemäßen Emailzusammensetzungen herzustellen, wird bzw. werden die erforderliche(n) Glasfritte(n) mittels konventioneller Verfahren zu einem feinen Pulver gemahlen. Die Glasfritte-Komponente wird mit den anderen Feststoffen kombiniert, und die Feststoffe werden mit dem erforderlichen Träger vermischt. Die Viskosität wird nach Bedarf eingestellt.

Sobald die Emailzusammensetzung hergestellt ist, kann sie durch konventionelle Methoden, z.B. Siebdruck, Abzugsverfahren, Sprühen, Streichen, Rollbeschichtung oder dergleichen auf das Substrat aufgetragen werden. Siebdruck wird bevorzugt, wenn die Zusammensetzung auf ein Glassubstrat aufgebracht wird. Nach dem Aufbringen der Zusammensetzung auf ein Substrat in der gewünschten Musterung wird die aufgebrachte Schicht eingebrannt, um das Email mit dem Substrat zu verbinden. Die Brenntemperatur wird generell durch die Garbrandtemperatur der Glasfritte bestimmt und liegt vorzugsweise innerhalb eines breiten Temperaturbereichs. Die Brenntemperatur für eine Schnellbrandzusammensetzung liegt typischerweise im Bereich von etwa 500 bis 750 °C, vorzugsweise im Bereich von 520 bis 650 °C und besonders bevorzugt etwa 530 bis 620 °C.

### BEISPIELE

Glasfrittenzusammensetzungen mit niedrigem Schmelzpunkt werden durch Mischung bekannter Rohstoffe und mit bekannten Verfahren hergestellt. Die gut gemischten Rohzusammensetzungen werden dann mit dem Fachmann ebenfalls geläufigen Verfahren bei Temperaturen zwischen 1000 und 1300 °C geschmolzen und dann abgeschreckt. Die Glaszusammensetzungen werden dann in einer Kugelmühle auf eine feine Teilchengröße, vorzugsweise zwischen 2 und 6 Mikron, gemahlen. Die fein gemahlenen pulverförmigen Glasfritten werden dann für die Herstellung von Glasemailzusammensetzungen verwendet.

Die fein gemahlene Glasfritte wird mit einem Mischmetalloxid-Pigment kombiniert.

Die Feststoffe der Emailzusammensetzungen werden dispergiert und in einem unter Berücksichtigung der Endanwendung ausgewählten Träger suspendiert.

Ein Test erfolgt mittels Siebdruck-Auftrag der erzeugten Glasfritte oder Emailpaste auf einem Mikroskopträger oder Fahrzeugglas-Substrat. Die Mikroskopträger bzw. das Fahrzeugglas-Substrat werden dann unter verschiedenen Temperaturen gebrannt, um die "Brenntemperatur" (BT) bzw. die "Mindest-Brenntemperatur" (MBT) zu bestimmen. Die BT ist die Temperatur, bei der das Glas innerhalb eines 15-minütigen Brennvorgangs ausreichend Zeit zum Fließen und Verschmelzen hat und eine glänzende, glatte Oberfläche bildet. Die MBT ist die Temperatur, bei der das Email innerhalb eines 4-minütigen Brennvorgangs ausreichend Zeit zum Fließen und Verschmelzen hat und einen Email ohne untereinander verbundene Poren ergibt. Die Vorheizzeit beträgt 10 bzw. 6 Minuten bei 427 °C für BT bzw. MBT.

Die Säurebeständigkeit wird mittels ASTM C-724-91 mit einer 10 Gew.-% Zitronensäure enthaltenden Lösung geprüft. Gebrannte Muster werden 15 Minuten lang der Lösung ausgesetzt und anhand der folgenden Güteklassen bewertet:
- Güteklasse 1 -: Kein sichtbarer Angriff.
- Güteklasse 2 -: Auftreten einer Irisation oder eines sichtbaren Fleckens auf der behandelten Oberfläche bei Betrachtung unter einem 45°-Winkel, aber nicht sichtbar unter Winkeln von weniger als 30°.
- Güteklasse 3 -: Ein deutlicher Fleck, der reflektierte Bilder nicht verzerrt und unter Winkeln von weniger als 30° sichtbar ist.
- Güteklasse 4 -: Ein deutlicher Fleck mit einer erheblichen Farbänderung oder sehr irisierenden Oberfläche, der unter Winkeln von weniger als 30° sichtbar ist und reflektierte Bilder verzerren kann.
- Güteklasse 5 -: Oberfläche stumpf oder matt mit möglichem Abkreiden.
- Güteklasse 6 -: Erheblicher Abtrag von Email mit sichtbaren Löchern.
- Güteklasse 7 -: Vollständiger Abtrag des Email im behandelten Bereich.

### Glasfritte-Formulierung (Gew.-%)

| Komponente | Beispiel 1 | Beispiel 2 | Beispiel 3 | Beispiel 4 | Beispiel 5 |
|---|---|---|---|---|---|
| Bi₂O₃ | 51,3 | 56,6 | 61,9 | 47,7 | 51,3 |
| SiO₂ | 31,2 | 27,9 | 24,4 | 32,6 | 31,0 |
| B₂O₃ | 10,9 | 9,7 | 8,2 | 12,3 | 11,0 |
| Al₂O₃ | 0,3 | 0,2 | 0,2 | 0,3 | 0,3 |
| TiO₂ | 1,4 | 1,2 | 1,2 | 1,4 | 1,3 |
| Na₂O | 4,3 | 3,8 | 3,6 | 5,2 | 4,4 |
| K₂O | 0,6 | 0,6 | 0,5 | 0,4 | 0,7 |
| Brenntemperatur (BT) (°C) | 560 | 545 | 530 | 565 | 560 |
| Säurebeständigkeit ASTM C-721-91 | 2 | 1 | 1 | 1 | 1 |

Die folgenden schwarzen Emailzusammensetzungen für Fahrzeug-Anwendungen wurden mit den vorstehenden Glasfritten hergestellt.

### Formulierung für schwarzes Email (Gew.-%)

| Komponente | Beispiel 6 | Beispiel 7 | Beispiel 8 | Beispiel 9 | Beispiel 10 |
|---|---|---|---|---|---|
| Glasfritte Beispiel 1 | 69,0 | | | | |
| Glasfritte Beispiel 2 | | 69,0 | | | |
| Glasfritte Beispiel 3 | | | 71,0 | | |
| Glasfritte Beispiel 4 | | | | 70,0 | |
| Glasfritte Beispiel 5 | | | | | 70,0 |
| Pigment *2991 *) | 27,5 | 27,5 | 26,0 | 27,5 | 27,5 |
| RD-2077 *) | 3,5 | 3,5 | 3,0 | 2,5 | 2,5 |
| MBT-Temp. (°C) | 620 | 620 | 610 | 610 | 620 |
| Säurebeständigkeit ASTM C-724-91 | 2 | 2 | 3 | 1 | 1 |
| AntihaftungsEigenschaften | exzellent | exzellent | exzellent | Gut | Sehr gut |

| | | | | | |
|---|---|---|---|---|---|
| *) Pigment *2991 ist ein Kupfer-Chrom-Pigment und RD-2077 ein Wismutsilikat-Material. Beide Materialien sind bei der Cerdec Corporation, Drakenfield Products, West Wylie Avenue, Washington, Pennsylvania, U.S.A. erhältlich. | | | | | |

Die Bewertung der Antihaftungs-Eigenschaften erfolgt durch Aufdruck des Email auf ein Fahrzeugglas-Substrat im Format 10,6 x 10,6 cm, Brennen in einem 3- bis 5-minütigen, für Fahrzeuge typischen Brennzyklus und Pressen mit einem Ballen aus handelsüblichem Material, während das heiße Email und Substrat sich im Brennofen befinden.

## Patentansprüche

1. Glaszusammensetzung, bestehend im wesentlichen aus
| | |
|---|---|
| Bi₂O₃ | 48 - 62 Gew.-% |
| SiO₂ | 25 - 33 Gew.-% |
| B₂O₃ | 8 - 12 Gew.-% |
| Al₂O₃ | 0,1 - 0,5 Gew.-% |
| TiO₂ | 1 - 2 Gew.-% |
| Na₂O | 3,2 - 5,2 Gew.-% |
| K₂O | 0,2 - 0,7 Gew.-% |
| Li₂O | 0 |
| F⁻¹ | 0 |

2. Glasfritte, **dadurch gekennzeichnet,**
**daß** die Glaszusammensetzung im wesentlichen aus
| | |
|---|---|
| Bi₂O₃ | 48 - 62 Gew.-% |
| SiO₂ | 25 - 33 Gew.-% |
| B₂O₃ | 8 - 12 Gew.-% |
| Al₂O₃ | 0,1 - 0,5 Gew.-% |
| TiO₂ | 1 - 2 Gew.-% |
| Na₂O | 3,2 - 5,2 Gew.-% |
| K₂O | 0,2 - 0,7 Gew.-% |
besteht.

3. Glasemailzusammensetzung, umfassend eine Glasfritte-Komponente, eine Oxidpigment-Komponente und einen organischen Träger,
**dadurch gekennzeichnet,**
**daß** die Glasfritte-Komponente mindestens eine Glasfritte umfaßt, deren Glaszusammensetzung im wesentlichen aus
| | |
|---|---|
| Bi₂O₃ | 48 - 62 Gew.-% |
| SiO₂ | 25 - 33 Gew.-% |
| B₂O₃ | 8 - 12 Gew.-% |
| Al₂O₃ | 0,1 - 0,5 Gew.-% |
| TiO₂ | 1 - 2 Gew.-% |
| Na₂O | 3,2 - 5,2 Gew.-% |
| K₂O | 0,2 - 0,7 Gew.-% |
besteht.

4. Glasemailzusammensetzung gemäß Ansprüche 3 bis 9,
**dadurch gekennzeichnet,**
**daß** der Feststoffgehalt 85 bis 60 Gew.-% beträgt.

5. Glasemailzusammensetzung gemäß Ansprüche 3 oder 4,
**dadurch gekennzeichnet,**
**daß** sie auch bis zu 20 Gew.-% Feststoffe in Form eines kristallförmigen Impfmaterials enthält.

6. Glasemailzusammensetzung gemäß Anspruch 5,
**dadurch gekennzeichnet,**
**daß** das kristallförmige Impfmaterial ein Wismutsilikat ist.

7. Porenfreies Substrat, insbesondere Fahrzeugglas, mit darauf eingebrannter Glasemailzusammensetzung gemäß einem der Ansprüche 4 bis 6.

## Claims

1. Glass composition substantially consisting of
| | |
|---|---|
| Bi₂O₃ | 48 - 62 wt.% |
| SiO₂ | 25 - 33 wt.% |
| B₂O₃ | 8 - 12 wt.% |
| Al₂O₃ | 0.1 - 0.5 wt.% |
| TiO₂ | 1 - 2 wt.% |
| Na₂O | 3.2 - 5.2 wt.% |
| K₂O | 0.2 - 0.7 wt.% |
| Li₂O | 0 |
| F⁻¹ | 0. |

2. Glass frit, **characterised in that**
the glass composition substantially consists of
| | |
|---|---|
| Bi₂O₃ | 48 - 62 wt.% |
| SiO₂ | 25 - 33 wt.% |
| B₂O₃ | 8 - 12 wt.% |
| Al₂O₃ | 0.1 - 0.5 wt.% |
| TiO₂ | 1 - 2 wt.% |
| Na₂O | 3.2 - 5.2 wt.% |
| K₂O | 0.2 - 0.7 wt.%. |

3. Glass enamel composition comprising a glass frit component, an oxide pigment component and an organic support,
**characterised in that**
the glass frit component comprises at least one glass frit, the glass composition of which substantially consists of
| | |
|---|---|
| Bi₂O₃ | 48 - 62 wt.% |
| SiO₂ | 25 - 33 wt.% |
| B₂O₃ | 8 - 12 wt.% |
| Al₂O₃ | 0.1 - 0.5 wt.% |
| TiO₂ | 1 - 2 wt.% |
| Na₂O | 3.2 - 5.2 wt.% |
| K₂O | 0.2 - 0.7 wt.%. |

4. Glass enamel composition according to claims 3 to 9,
**characterised in that**
the solids content is 85 to 60 wt.%.

5. Glass enamel composition according to claims 3 or 4,
**characterised in that**
it also contains up to 20 wt.% of solids in the form of a crystalline seed material.

6. Glass enamel composition according to claim 5,
**characterised in that**
the crystalline seed material is a bismuth silicate.

7. Pore-free substrate, in particular automotive glazing, with a glass enamel composition according to one of claims 4 to 6 stoved thereon.

## Revendications

1. Composition de verre, constituée essentiellement de
| | |
|---|---|
| Bi₂O₃ | 48 à 62 % en poids |
| SiO₂ | 25 à 33 % en poids |
| B₂O₃ | 8 à 12 % en poids |
| Ai₂O₃ | 0,1 à 0,5 % en poids |
| TiO₂ | 1 à 2 % en poids |
| Na₂O | 3,2 à 5,2 % en poids |
| K₂O | 0,2 à 0,7 % en poids |
| Li₂O | 0 |
| F⁻¹ | 0 |

2. Verre fritté,
**caractérisé en ce que**
la composition de verre comprend essentiellement
| | |
|---|---|
| Bi₂O₃ | 48 - 62 % en poids |
| SiO₂ | 25 - 33 % en poids |
| B₂O₃ | 8 - 12 % en poids |
| Al₂O₃ | 0,1 - 0,5 % en poids |
| TiO₂ | 1 - 2 % en poids |
| Na₂O | 3,2 - 5,2 % en poids |
| K₂O | 0,2 - 0,7 % en poids. |

3. Composition d'émail de verre, comprenant un composant verre fritté, un composant pigment oxyde et un support organique,
**caractérisée en ce que**
le composant verre fritté comprend au moins un verre fritté, dont la composition en verre est constituée essentiellement de
| | |
|---|---|
| Bi₂O₃ | 48 - 62 % en poids |
| SiO₂ | 25 - 33 % en poids |
| B₂O₃ | 8 - 12 % en poids |
| Al₂O₃ | 0,1 - 0,5 % en poids |
| TiO₂ | 1 - 2 % en poids |
| Na₂O | 3,2 - 5,2 % en poids |
| K₂O | 0,2 - 0,7 % en poids. |

4. Composition d'émail en verre selon les revendications 3 à 9,
**caractérisée en ce que**
la teneur en solide va de 85 à 60% en poids.

5. Composition d'émail en verre selon la revendication 3 ou 4,
**caractérisée en ce qu'**
elle contient également jusqu'à 20% en poids de solide sous la forme d'un matériau d'ensemencement en forme de cristal.

6. Composition d'émail en verre selon la revendication 5,
**caractérisée en ce que**
le matériau d'ensemencement en verre en forme de cristal est un silicate de bismuth.

7. Substrat dépourvu de pores, en particulier verre pour automobile,
sur lequel
est cuite une composition d'émail de verre selon l'une des revendications 4 à 6.
